# EUROPEAN PATENT SPECIFICATION

(11) **EP 0 470 424 B1**
(45) Date of publication and mention of the grant of the patent: **15.10.1997**
(21) Application number: 91112263.8
(22) Date of filing: 22.07.1991
(51) Int. Cl.: B62D 7/20, B62D 7/00

(54) **Means to limit the lock angle of a vehicle's wheels**
Vorrichtung zum Begrenzen des Einschlagwinkels von Fahrzeugrädern
Moyens pour limiter l'angle de braquage des roues d'un véhicule

(30) Priority: 07.08.1990 IT 6762290
(43) Date of publication of application: 12.02.1992
(73) Proprietor: FIAT AUTO S.p.A., 10135 Torino (IT)
(72) Inventor: Bonelli,Mauro, I-10100 Torino (IT)
(74) Representative: Cerbaro, Elena

(56) References cited:
- EP-A- 0 345 555
- EP-A- 0 376 557
- US-A- 4 653 773
- US-A- 4 660 845
- PATENT ABSTRACTS OF JAPAN, vol. 12, no. 251 (M-718), 15th July 1988; & JP-A-63 038 083 (KUBOTA LTD) 18-02-1988
- PATENT ABSTRACTS OF JAPAN, vol. 12, no. 1 (M-656), 6th January 1988; & JP-A-62 166 164 (KUBOTA LTD) 22-07-1987
- PATENT ABSTRACTS OF JAPAN, vol. 10, no. 388 (M-549), 25th December 1986; & JP- A-61 178 264 (FUKUOKA YASUTAKA) 09-08-1986
- PATENT ABSTRACTS OF JAPAN, vol. 11, no. 196 (M-601), 24th June 1987; & JP-A-62 020 759 (HONDA MOTOR CO., LTD) 29-01-1987

## Description

This invention relates to means for limiting the lock angle of the wheels of a vehicle in order to avoid possible interference between the latter and the wheel arch.

It is known that in order to make better use of the interior space in vehicles the internal dimensions of wheel arches are increasingly becoming smaller. In particular the transverse width of the wheel arches for the steered wheels of a vehicle is barely sufficient to ensure a clearance of a few millimetres between the wheel and the wheel arch when the wheels are fully turned in one of the two possible directions. This being the case interference with wheels at full lock may accidentally occur if devices which alter their external diameter, for example small gripping devices such as chains, crampons, etc., are mounted on the wheels. Obviously, this problem cannot be solved by the device disclosed by EP-A-0 376 557 (corresponding to the preamble of claim 1), which comprises means to limit the lock angle of the wheels operated by a control mechanism responsive to a sensed vehicular operating parameter, e.g. speed.

The object of the invention is to prevent interference between wheels fitted with auxiliary devices, e.g. chains, and the corresponding wheel arches when the vehicle's steering has been turned to full lock by the driver.

The abovementioned object is accomplished by the invention which relates to a steering system of the type comprising means for limiting the lock angle of a vehicle's wheels as claimed in claim 1.

A non-restrictive description of an embodiment of the invention will now be provided for better understanding thereof, with reference to the appended drawing in which:
Figure 1 illustrates a diagrammatical plan view of a vehicle and its corresponding steering gear fitted with the limiting device constructed according to the invention, shown in two alternative positions (a) and (b) in which the limiting device is and is not inserted respectively, and
Figures 2 and 3 illustrate a detail of the limiting device in Figure 1 in the withdrawn and inserted positions respectively, on a magnified scale.

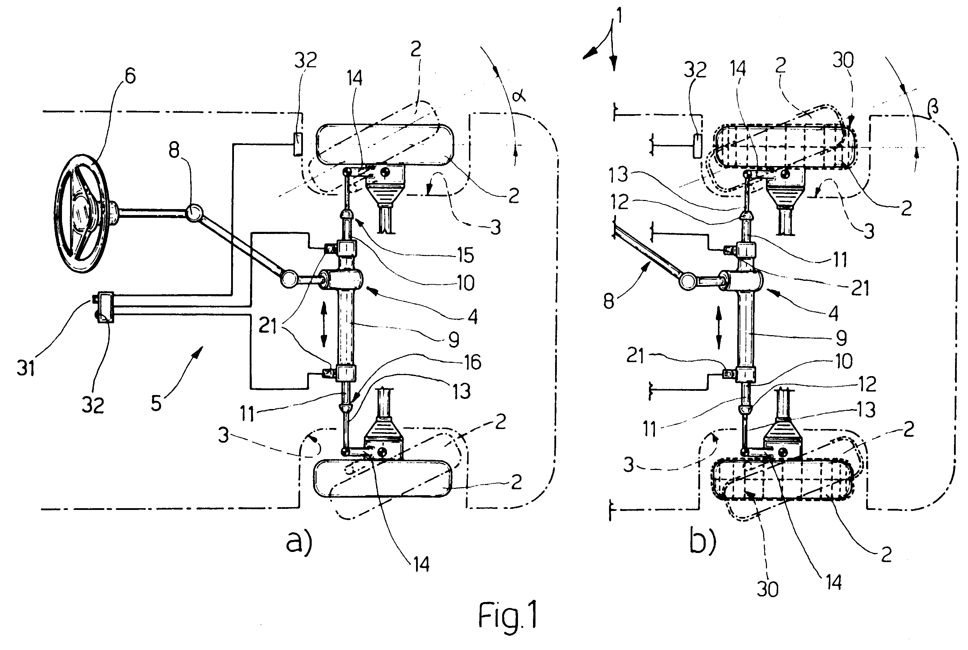

With reference to Figures 1 to 3, 1 indicates a vehicle of any known type whose corresponding pair of front steered wheels 2 housed within wheel arches 3 of vehicle body 1 can be operated by means of known steering gear 4 which is fitted with an additional device 5 restricting the maximum angle of lock of the wheels.

In particular, known steering gear 4 includes a steering wheel 6 which controls via a linked shaft transmission 8 a steering box 9 of a known type, which may be of the direct mechanical control or servo-assisted type, within which a transverse steering gear control rod 10 can move in an axial direction; opposite ends 11 thereof project from opposite sides of steering box 9 and are connected by means of corresponding known universal joints 12 to corresponding known track rods 13 which are in turn connected to corresponding wheel controlling track arms 14 which in a known way are integral with the hubs thereof, which are supported by appropriate known suspensions which are not illustrated for the sake of simplicity. The rotation of steering wheel 6 brings about transverse movement of rod 12 in one of the two directions indicated by the arrows (Figure 1) which produces a displacement of track rods 13 which act simultaneously in an opposite way on the track arms 14 of corresponding wheels 2 to bring about rotation parallel to the plane of the drawing (steering - Figure 1) through a given angle; the greater or lesser magnitude of this angle determines the lock radius of the vehicle.

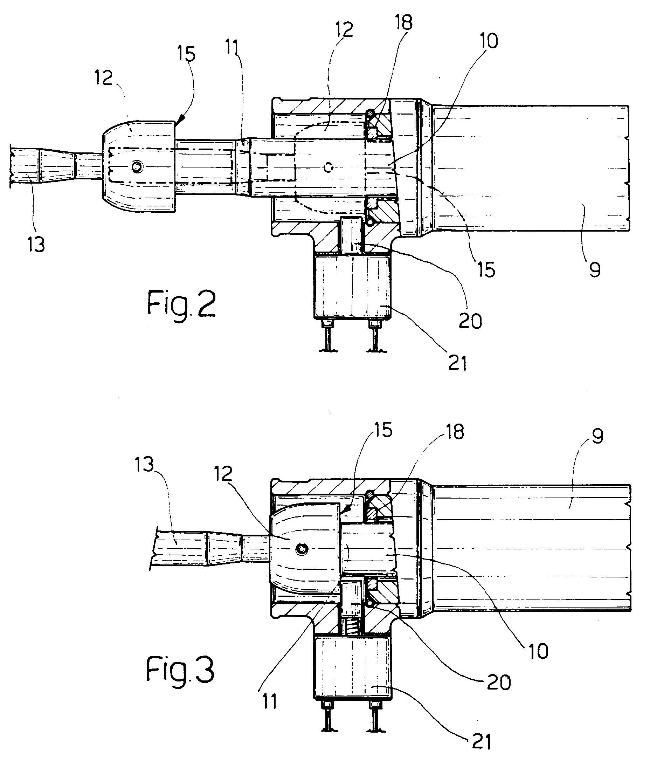

A minimum lock radius is obtained by rotating steering wheel 6 to the end of its travel. The fully locked position is determined by suitable stops to the transverse movement of rod 10. In particular, joints 12, which move integrally with the ends 11 of rod 10, are provided with corresponding opposite flat frontal surfaces 15, 16 (Figure 1a) forming shoulder means on rod 10 and integral therewith which come into operation in both possible directions of displacement of said rod 10. These shoulder means are capable of acting in concert with corresponding travel limiting blocks 18 integrally mounted within steering box 9 at both the projecting opposite ends 11 of rod 10. In Figures 2, 3 only the block corresponding to shoulder surface 15 is illustrated, that corresponding to 16 being symmetrical and therefore not being illustrated for the sake of simplicity.

In normal circumstances, when steering wheel 6 is further rotated, rod 10 is moved transversely by a distance such as to bring either surface 15 (Figure 2) or surface 16 (depending on the direction of rotation of steering wheel 6) against corresponding travel limiting block 18. This brings the transverse movement of rod 10 and rotation of steering wheel 6 to a stop and locks wheels 2 in the position illustrated by dashed lines in Figure 1a, in which they are in the maximum possible angle of lock, indicated by α. The axial position of blocks 18 and surfaces 15, 16 is selected so that angle α has a predetermined magnitude such as to avoid any possible interference between wheels 2 and wheel arches 3, while leaving a small clearance between wheels 2 and wheel arches 3.

In accordance with the invention steering box 9 also has sliding pins 20 close to blocks 18 and transverse to rod 10, which pins are activated by corresponding electromechanical actuators 21 borne by steering box 9 externally thereto, and which can selectively adopt, by means of actuators 21, an inserted position, illustrated in Figure 2, in which they cannot come into contact with surfaces 15, 16, and a pulled out position, illustrated in Figure 3, in which vice versa they are capable of acting in concert with surfaces 15, 16. In particular pins 20 are provided one to each block 18, in front thereof and radially with respect to box 9, in such a way that when in the pulled out position they lie between corresponding blocks 18 and corresponding joints 12 facing them so as to come into contact with surfaces 15, 16 before these come into contact with blocks 18. In this way steering wheel 10 is stopped in an axial position such that wheels 2 are positioned according to a second lock angle β (Figure 1b) of smaller magnitude than previous angle α adopted by wheels 2 on the basis of the position of travel limiting stops 18. Therefore, when pins 20 are pulled out, wheels 2 reach the position of maximum lock, with resulting stoppage of steering wheel 6, at an earlier stage, thus providing greater clearance between wheels 2 (position illustrated by dashed lines in Figure 1b) and wheel arches 3 than in the previous case. In this way additional devices, e.g. snow chains 30, can be mounted on wheels 2 without the risk of there being interference with wheel arches 3 when the driver turns steering wheel 6 to full lock.

The pulling out of pins 20, with a consequence reduction in the possible lock angle (from α to β ) is controlled by powering actuators 21 via appropriate control means, for example by manually switching on a switch 31 equipped with a suitable system operational status indicator lamp 32 mounted on the vehicle's dashboard so that it can easily be operated by the driver of vehicle 1. It is also possible that actuators 21 may be controlled automatically by corresponding sensors 32, for example magnetic sensors capable of detecting the presence of snow chains 30 on wheels 2, instead of by means of switch 31 alone. When such chains are found to be present actuators 21 are activated causing pins 20 to be pulled out, thus preventing wheels 2 from reaching the position in Figure 1a, in which, given the small clearance between the wheels and wheel arches 3, it would be possible for interference with the walls of wheel arches 3 to occur with consequent damage to the vehicle body. In this case switch 31 may act as an emergency on/off switch for actuators 21, to be used in the event of damage to sensors 32.

The advantages associated with the invention are obvious from what has been described. When wheels 2 are not carrying auxiliary devices they may be moved by rotating steering wheel 6 to a position in which their lock angle is a maximum (angle α), and therefore the lock radius of the vehicle is a minimum, and in which the clearances between wheels 2 and wheel arches 3 are also a minimum, so as to maximise the space available for the engine compartment and the vehicle's interior. When vice versa additional devices which might come into contact with the body are mounted on wheels 2, pins 20 come into play and reduce the maximum lock angle of the wheels (angle β). The lock radius increases slightly, but this disadvantage is largely compensated for by the advantage secured in terms of space and safety.

Finally it is clear that variants and modifications may be made to what has been described without thereby going beyond the scope of the invention; for example, in the case of industrial vehicles, actuators 21 may be pneumatic instead of electromechanical.

## Claims

1. A steering system (4) of the type comprising means (5) to restrict the lock angle of the wheels (2) of a vehicle (1), the said lock angle being controlled by the axial position of a steering control rod (10), the opposite ends (11) of which are connected through corresponding joints (12) to corresponding track rods (13) connected to corresponding track arms (14) on the wheels (2); the device including shoulder means (15,16) integrally mounted on the said steering control rod (10) and capable of acting in concert with corresponding fixed travel limiting means (18), mounted within a steering box (9), to move and selectively abut against the latter following axial transverse movement of the said steering control rod (10) in a predetermined direction in order to bring the said control rod (10) to a stop at a first lock angle (α) of the wheels (2) of predetermined magnitude; said means for restricting the lock angle (5) comprising corresponding actuated slidable elements (20) located transversely to the said steering control rod (10) and capable of assuming a pulled out position wherein they intercept the said shoulder means (15,16) on the steering control rod (10) before the latter come into contact with said travel limiting means (18), in such a way as to stop the said steering control rod (10) at a second lock angle (β) of the wheels (2) of smaller magnitude than the said first angle (α); said means for restricting the lock angle (5) further comprising an actuator (21) for each said slidable element (20), borne by said steering box (9) externally thereto; **characterized** in that, in combination:
i). said travel limiting means consist of fixed blocks (18) integrally mounted within said steering box (9), within which said steering control rod (10) can move in an axial direction and from opposite sides of which said opposite ends (11) of the steering control rod (10) project;
ii). said actuated slidable elements consist of sliding pins (20) provided through said steering box (9) close to said fixed blocks (18); and
iii). said actuators (21) actuates said slidable pins (20) and is capable, when energized, of causing the corresponding slidable pin (20) to travel between (a) an inserted position, wherein it cannot came into contact with said shoulder means (15,16), and (b) a pulled out position, wherein the said slidable pins (20) are each placed in front of a corresponding said fixed block (18) and radially with respect to the steering box (9), in such a way that each pin (20) lie between a corresponding travel limiting block (18) and a corresponding said shoulder (15,16) of the steering rod (10); and actuator control means (31,32) for energizing and de-energizing said actuators (21) in order to control the radial position of said pins (20);
iv) said actuator control means including a sensor (32) located in a corresponding wheel arch of the vehicle (1) for each of the said steered wheels (2) for sensing the presence onto the wheel of an accessory device.

2. A steering system according to claim 1, characterised in that the said shoulder means on the steering control rod (10) are defined by corresponding opposite frontal surfaces (15,16) of the said joints (12).

3. A steering system according to claims 1 or 2, characterised in that the said actuators (21) which slide the pins (20) are electromechanical actuators (21).

4. A steering system according to any one of the foregoing claims, characterised in that the said actuator control means include a switch (31) mounted on the vehicle's dashboard in a position such that it can be operated by the vehicle's driver.

## Patentansprüche

1. Lenksystem (4), umfassend eine Vorrichtung (5) zum Beschränken des Einschlagwinkels der Räder (2) eines Fahrzeugs (1), wobei der Einschlagwinkel gesteuert wird durch die axiale Position einer Längsschubstange (10), deren gegenüberliegenden Enden (11) mittels geeigneter Gelenke (12) mit entsprechenden Spurstangen (13), die mit entsprechenden Spurstangenhebeln (14) mit den Rädern (2) verbunden sind, gekoppelt sind, bei dem die Vorrichtung Anschlagsmittel (15, 16) aufweist, die ganz an der Längsschubstange (10) angebracht sind und zusammen mit entsprechenden festen Bewegungsbegrenzern (18) wirken können, die innerhalb eines Lenkgehäuses (9) untergebracht sind, um sich zu bewegen und gegen letztere anzustoßen auf eine axiale Querbewegung der Längsschubstange (10) hin in eine vorbestimmte Richtung um die Längsschubstange (10) an einem ersten Anschlagwinkel (α) der Räder vorbestimmter Größe zum Halten zu bringen, wobei die Vorrichtung zum Beschränken des Anschlagwinkels (5) korrespondierend betätigte Gleitelemente (20) aufweist, die quer zu der Längsschubstange (10) angeordnet sind und eine ausgefahrene Position einnehmen können, in der sie die Anschlagsmittel (15, 16) auf der Längsschubstange (10) abfangen, bevor diese mit den Bewegungsbegrenzern in Berührung kommen, in einer solchen Weise, um die Längsschubstange (10) an einem zweiten Anschlagwinkel (β) der Räder (2) kleinerer Größe als der erste Winkel (α) zu stoppen, wobei die Vorrichtung zum Beschränken des Anschlagwinkels (5) darüber hinaus ein Stellglied (21) für jedes der genannten Gleitelemente (20) umfaßt, welches von dem Lenkgehäuse außen getragen wird, dadurch gekennzeichnet, daß in Kombination:
i) die Begewegungsbegrenzer aus befestigten Blöcken (18) bestehen, die einstückig innerhalb des Lenkgehäuses (9) angeordnet sind, innerhalb dessen die Längsschubstange (10) sich in axialer Richtung bewegen kann und aus dessen gegenüberliegenden Seiten die gegenüberliegenden Enden der Längsschubstange (10) herausragen;
ii) die betätigten Gleitelemente aus Gleitbolzen (20) bestehen, die durch das Lenkgehäuse (9) nahe bei den befestigten Blöcken (18) angeordnet sind, und
iii) die Stellglieder die Gleitbolzen (20) betätigen und - stromdurchflossen - in der Lage sind, den entsprechenden Gleitbolzen zur Bewegung zu veranlassen zwischen einer (a) eingezogenen Position, in der er nicht in Kontakt mit den Anschlagsmitteln (15, 16) kommt, und einer (b) ausgefahrenen Position, in der die Gleitbolzen (20) jeweils vor einem entsprechenden befestigten Block (18) und radial in bezug auf das Lenkgehäuse (9) gebracht werden, derart, daß jeder Bolzen (20) zwischen einem entsprechenden Bewegungsbegrenzerblock (18) und einem entsprechenden Anschlag (15, 16) der Lenkstange (10) liegt, und Stellglied-Steuermittel (31, 32) zum Erregen und Abregen der Stellglieder (21), um die Radiallage der Bolzen (20) zu steuern, und
iv) wobei die Stellglied-Steuermittel einen Sensor (32) aufweisen, der in dem betreffenden Radkasten des Fahrzeugs (1) für jedes der lenkbaren Räder (2) angeordnet ist zum Erfassen der Anwesenheit eines Zubehörteils auf dem Rad.

2. Lenksystem nach Anspruch 1, dadurch gekennzeichnet, daß die Anschlagsmittel auf der Längsschubstange (10) definiert sind durch entsprechende gegenüberliegende Stirnseiten (15, 16) der Gelenke (12).

3. Lenksystem nach Anspruch 1 oder 2, dadurch gekennzeichnet, daß die Stellglieder (21), welche die Bolzen (20) gleiten lassen, elektromagnetische Stellglieder (21) sind.

4. Lenksystem nach einem der vorhergehenden Ansprüche, dadurch gekennzeichnet, daß die Stellglieder-Steuermittel einen Schalter (31) aufweisen, der am Armaturenbrett des Fahrzeugs in einer solchen Position angebracht ist, daß er vom Fahrzeugführer betätigt werden kann.

## Revendications

1. Système de direction (4) du type comprenant des moyens (5) pour restreindre l'angle de braquage des roues (2) d'un véhicule (1), ledit angle de braquage étant commandé par la position axiale d'une tige de commande de direction (10), dont les extrémités opposées (11) sont reliées par des joints correspondants (12) à des barres d'accouplement correspondantes (13) reliées à des bras d'accouplement correspondants (14) sur les roues (2) ; le dispositif comportant des moyens formant épaulement (15, 16) montés d'un seul tenant sur ladite tige de commande de direction (10) et capables d'agir de concert avec des moyens de limitation de débattement fixes correspondants (18), montés à l'intérieur d'une boîte de direction (9), pour se déplacer et buter sélectivement en opposition au dernier déplacement consécutif transversal et axial de ladite tige de commande de direction (10) selon une direction prédéterminée afin d'amener ladite tige de commande (10) à un arrêt à un premier angle de braquage (α) des roues (2) de valeur prédéterminée ; lesdits moyens pour restreindre l'angle de braquage (5) comprenant des éléments coulissants commandés (20) situés transversalement à la tige de commande de direction (10) et capables de prendre une position décrochée dans laquelle ils interceptent lesdits moyens formant épaulement (15, 16) sur la tige de commande de direction (10) avant que cette dernière entre en contact avec lesdits moyens de limitation de débattement (18), de manière à bloquer ladite tige de commande de direction (10) à un second angle de braquage (β) des roues (2) de valeur inférieure audit premier angle (α) ; lesdits moyens pour restreindre l'angle de braquage (5) comprenant de plus un actionneur (21) pour chaque dit élément coulissant (20), porté par ladite boîte de direction (9) à l'extérieur de celle-ci ; caractérisé en ce que, en association :
i) lesdits moyens de limitation de débattement se composent de blocs fixes (18) monté d'un seul tenant à l'intérieur de ladite boîte de direction (9), à l'intérieur de laquelle ladite tige de commande de direction (10) peut se déplacer dans une direction axiale et à partir des côtés opposés de laquelle lesdites extrémités opposées (11) de la tige de commande de direction (10) font saillie ;
ii) lesdits éléments coulissants commandés se composent d'axes coulissants (20) prévus traversant ladite boîte de direction (9) près desdits blocs fixes (18) ; et
iii) ledit actionneur (21) actionne lesdits axes coulissants (20) et est capable, lorsqu'un courant le traverse, de faire en sorte que l'axe coulissant correspondant (20) se déplace entre (a) une position insérée, dans laquelle il ne peut pas entrer en contact avec lesdits moyens formant épaulement (15, 16), et (b) une position décrochée, dans laquelle lesdits axes coulissants (20) sont chacun placés en face d'un dit bloc fixe correspondant (18) et radialement par rapport à la boîte de direction (9), de telle manière que chaque axe (20) se trouve entre un bloc de limitation de débattement (18) et un dit épaulement correspondant (15, 16) de la tige de direction (10) ; et des moyens de commande d'actionneur (31, 32) pour exciter et désexciter lesdits organes de commande (21) afin de commander la position radiale desdits axes (20) ;
iv) lesdits moyens de commande d'actionneur comportant un détecteur (32) situé dans une aile de roue correspondante du véhicule (1) pour chacune desdites roues directrices (2) pour détecter la présence sur la roue d'un dispositif accessoire.

2. Système de direction selon la revendication 1, caractérisé en ce que lesdits moyens formant épaulement sur la tige de commande de direction (10) sont définis par des surfaces frontales opposées correspondantes (15, 16) desdits joints (12).

3. Système de direction selon les revendications 1 ou 2, caractérisé en ce que lesdits organes de commande (21) qui font coulisser les axes (20) sont des organes de commande électromécaniques (21).

4. Système de direction selon l'une quelconque des revendications précédentes, caractérisé en ce que lesdits moyens de commande d'actionneur comportent un interrupteur (31) monté sur tableau de bord du véhicule à un emplacement tel qu'il peut être actionné par le conducteur du véhicule.
